Europäisches Patentamt

European Patent Office

Office européen des brevets

(19)

(11) Publication number: **0 400 801**

**A2**

# EUROPEAN PATENT APPLICATION

(12)

(21) Application number: **90304361.0**

(22) Date of filing: **24.04.90**

(51) Int. Cl.⁵: **C08J 7/04, C09D 109/00, C09D 133/04**

(30) Priority: **15.05.89 GB 8911065**

(43) Date of publication of application:
**05.12.90 Bulletin 90/49**

(84) Designated Contracting States:
**AT BE DE FR GB IT LU NL**

(71) Applicant: **IMPERIAL CHEMICAL INDUSTRIES PLC**
**Imperial Chemical House, Millbank**
**London SW1P 3JF(GB)**

(72) Inventor: **Gough, Thane Colin**
**48 Fernie Road**
**Guisborough, Cleveland(GB)**
Inventor: **Poole, Neil**
**4 Mallard Avenue, The Meadows**
**Leven, Beverley, Humberside(GB)**

(74) Representative: **Rhind, John Lessels et al**
**Imperial Chemical Industries PLC Legal**
**Department: Patents PO Box No 6 Bessemer**
**Road**
**Welwyn Garden City Herts AL7 1HD(GB)**

(54) **Polymeric film.**

(57) A self supporting plastic film comprises a substrate layer of polymeric material and a polymeric coating layer. The polymeric coating layer comprises (a) a first polymeric component comprising at least one monomer selected from butadiene and a derivative thereof, and (b) a second polymeric component comprising at least one monomer selected from acrylic acid, methacrylic acid and a derivative of acrylic acid and methacrylic acid. The aforementioned polymeric components are present as a copolymer thereof, the one with the other, or as a mixture thereof.

EP 0 400 801 A2

## Polymeric Film

This invention relates to a coated polymeric film, and in particular a coated thermoplastic polymeric film for use in a membrane touch switch.

A membrane touch switch is a low-voltage pressure sensitive device which has been designed to replace all types of push button arrays for a wide variety of applications, for example in calculators, home computers, toys, office machinery, scientific and mechanical equipment, domestic appliances, and the automotive industry. In contrast to the relatively complex and bulky electro-mechanical push button, the membrane touch switch is usually constructed from three or four layers of polymeric film. A typical switch will have a graphics layer, beneath which are two membranes, each screen printed with conducting ink circuitry, separated by a spacer film with die cut holes. Contact between the circuits is achieved by finger pressure over the die cut holes.

The graphics layer is usually reverse printed, and a wide variety of UV-cured inks and lacquers, and solvent inks and lacquers are used. There is therefore a need for the graphics layer to have good adhesion to a wide spectrum of inks and lacquers. Polymeric films normally used in membrane touch switches eg polyester, polycarbonate and polyimide films do not have the aforementioned property. The adhesive property of polymeric base films can be improved by applying additional coating materials which are more receptive to inks and lacquers. Unfortunately, these coating materials will generally only improve the adhesion of particular types of inks and lacquers, lacking the required spectrum effect. We have now devised a coated film which gives good adhesion to a wide range of inks and lacquers, which is particularly suitable for use as the graphics layer in a membrane touch switch.

Accordingly, the present invention provides a self supporting plastic film comprising a substrate layer of polymeric material having on at least one surface thereof a polymeric coating layer, wherein the polymeric coating layer comprises
(a) a first polymeric component comprising at least one monomer selected from butadiene and a derivative thereof, and
(b) a second polymeric component comprising at least one monomer selected from acrylic acid, methacrylic acid and a derivative of acrylic acid and methacrylic acid,
wherein said first and second polymeric components are present as a copolymer thereof, the one with the other, or as a mixture thereof.

The invention also provides a method of producing a self supporting plastic film by forming a substrate layer of a synthetic polymeric material, applying to at least one surface thereof a polymeric coating layer, wherein the polymeric coating layer comprises
(a) a first polymeric component comprising at least one monomer selected from butadiene and a derivative thereof, and
(b) a second polymeric component comprising at least one monomer selected from acrylic acid, methacrylic and a derivative of acrylic acid and methacrylic acid,
wherein said first and second polymeric components are present as a copolymer thereof, the one with the other, or as a mixture thereof.

The first polymeric component (a) comprises at least one monomer derived from butadiene, or a derivative of butadiene, for example maleinised butadiene. Maleinised polybutadiene can be prepared by reacting maleic anhydride with polybutadiene.

Other optional monomers which are suitable for use in the preparation of polymeric component (a) include acrylonitrile, styrene and styrene derivatives. Suitable styrene derivatives include chlorostyrene, hydroxy styrene and alkylated styrenes, wherein the alkyl group contains from one to ten carbon atoms. Styrene is particularly preferred as an optional monomer.

A preferred polymeric component (a) derived from 2 monomers comprises 1.0 mole butadiene:0.25 to 4.0 mole styrene, and a particularly preferred component comprises 1.0 mole of butadiene:1.4 mole of styrene.

The molecular weight of polymeric component (a) can vary over a wide range, but the weight average molecular weight is preferably within the range 5,000 to 1,000,000 and more preferably within the range 10,000 to 500,000, and particularly from 20,000 to 300,000.

The second polymeric component (b) preferably comprises at least one monomer derived from an ester of acrylic acid, especially an alkyl ester where the alkyl group contains up to ten carbon atoms such as methyl, ethyl, n-propyl, isopropyl, n-butyl, isobutyl, t-butyl, hexyl, 2-ethylhexyl, heptyl, and n-octyl. Polymers derived from an alkyl acrylate, for example ethyl acrylate and butyl acrylate, together with an alkyl methacrylate are preferred. Polymers comprising ethyl acrylate and methyl methacrylate are particularly preferred . The acrylate monomer is preferably present in a proportion in the range 30 to 65 mole %, and the methacrylate monomer is preferably present in a proportion in the range of 20 to 60 mole %.

Other monomers which are suitable for use in the preparation of polymeric component (b), which may be copolymerised as optional additional monomers together with esters of acrylic acid and/or methacrylic acid, and derivatives thereof, include acrylonitrile, methacrylonitrile, halo-substituted acrylonitrile, halo-substituted methacrylonitrile, acrylamide, methacrylamide, N-methylol acrylamide, N-ethanol acrylamide, N-propanol acrylamide, N-methacrylamide, N-ethanol methacrylamide, N-methyl acrylamide, N-tertiary butyl acrylamide, hydroxyethyl methacrylate, glycidyl acrylate, glycidyl methacrylate, dimethylamino ethyl methacrylate, itaconic acid, itaconic anhydride and half esters of itaconic acid.

Other optional monomers include vinyl esters such as vinyl acetate, vinyl chloracetate and vinyl benzoate, vinyl pyridine, vinyl chloride, vinylidene chloride, maleic acid, maleic anhydride, styrene and derivatives of styrene such as chloro styrene, hydroxy styrene and alkylated styrenes, wherein the alkyl group contains from one to ten carbon atoms.

A preferred polymeric component (b) derived from 3 monomers comprises 35 to 60 mole % of ethyl acrylate: 30 to 55 mole % of methyl methacrylate: 2 to 20 mole % of methacrylamide.

The molecular weight of polymeric component (b) can vary over a wide range but the weight average molecular weight is preferably within the range 40,000 to 300,000, and more preferably within the range 50,000 to 200,000.

The polymeric coating layer of the present invention can comprise a mixture of the first polymeric component (a) and second polymeric component (b), alternatively the said polymeric components (a) and (b) can be present in a copolymer. The aforementioned copolymer can be random or comprise blocks of polymeric components (a) and (b).

Optional monomers which are listed above for incorporation into polymeric components (a) and/or (b), can also be included as optional monomers in a copolymer of polymeric components (a) and (b). The polymeric coating layer preferably comprises a mixture of the first polymeric component (a) and the second polymeric component (b). The ratio of first polymeric component (a) to second polymeric component (b) can vary over a wide range, preferably in a weight ratio from 1.0:0.1 to 10.0, and more preferably 1.0:0.25 to 4.0, and particularly 1.0:1.0.

The polymeric coating layer may additionally comprise a third polymeric component (c), which preferably comprises at least one monomer derived from styrene and/or styrene derivatives. Suitable styrene derivatives include chlorostyrene, hydroxy styrene and alkylated styrenes, wherein the alkyl group contains from one to ten carbon atoms. Styrene is particularly preferred.

The first (a), second (b) and third (c) polymeric components may be present as a terpolymer thereof, or as a mixture thereof, or as a mixture of a copolymer of any combination of two out of the three components together with the remaining polymeric component. The aforementioned terpolymer and/or copolymer(s) can be random or comprise blocks of polymeric components (a) and/or (b) and/or (c).

The ratio of first (a), second (b) and third (c) polymeric components may vary over a wide range, preferably in a weight ratio from 0.1 to 10:1.0:0.1 to 10, and more preferably from 0.25 to 4.0:1.0:0.25 to 4.0.

If desired, the coal composition may also contain a cross-linking agent which functions to cross-link the polymeric coating layer thereby improving adhesion to the polymeric film substrate. Additionally, the cross-linking agent should preferably be capable of internal cross-linking in order to provide protection against solvent penetration. Suitable cross-linking agents may comprise epoxy resins, alkyd resins, amine derivatives such as hexamethoxymethyl melamine, and/or condensation products of an amine, eg melamine, diazine, urea, cyclic ethylene urea, cyclic propylene urea, thiourea, cyclic ethylene thiourea, alkyl melamines, aryl melamines, benzo guanamines, guanamines, alkyl guanamines and aryl guanamines, with an aldehyde, eg formaldehyde. A useful condensation product is that of melamine with formaldehyde. The condensation product may optionally be alkorylated. The cross-linking agent may be used in amounts of up to 25% by weight based on the weight of the polymer(s) in the coating composition. A catalyst is also preferably employed to facilitate cross-linking action of the cross linking agent. Preferred catalysts for cross-linking melamine formaldehyde include ammonium chloride, ammonium nitrate, ammonium thiocyanate, ammonium dihydrogen phosphate, ammonium sulphate, diammonium hydrogen phosphate, para toluene sulphonic acid, maleic acid stabilised by reaction with a base, and morpholinium paratoluene sulphonate.

The polymers of the coating composition are generally water-insoluble. The coating composition including the water-insoluble polymer(s) may nevertheless be applied to the polymeric film substrate as an aqueous dispersion or alternatively as a solution in an organic solvent.

The substrate of a coated film according to the invention may be formed from any synthetic, film-forming polymeric material. Suitable thermoplastics materials include a homopolymer or copolymer of a 1-olefine, such as ethylene, propylene and but-1-ene, a polyamide, a polycarbonate, and, particularly, a synthetic linear polyester which may be obtained by condensing one or more dicarboxylic acids or their lower alkyl (up to 6 carbon atoms) diesters, eg terephthalic acid, isophthalic acid, phthalic acid, 2,5- 2,6- or 2,7-naphthalenedicarboxylic acid, succinic acid, sebacic acid, adipic acid, azelaic acid, 4,4′-diphenyldicarboxylic acid, hexahydroterephthalic acid or 1,2-bis-p-carboxyphenoxyethane (optionally with a monocarboxylic acid, such as pivalic acid) with one or more glycols, particularly aliphatic glycols, eg ethylene glycol, 1,3-propanediol, 1,4-butanediol, neopentyl glycol and 1,4-cyclohexanedimethanol. A polyethylene terephthalate or polyethylene naphthalate film is preferred. A polyethylene terephthalate film is particularly preferred, especially such a film which has been biaxially oriented by sequential stretching in two mutually perpendicular directions, typically at a temperature in the range 70 to 125°, and preferably heat set, typically at a temperature in the range 150 to 250°, for example as described in British patent 838708.

The substrate may also comprise a polyarylether or thio analogue thereof, particularly a polyaryletherketone, polyaryiethersulphone, polyaryletheretherketone, polyaryletherethersulphone, or a copolymer or thioanalogue thereof. Examples of these polymers are disclosed in EP-A-1879, EP-A-184458 and US-A-4008203, particularly suitable materials being those sold by ICI PLC under the Registered Trade Mark STABAR. Blends of these polymers may also be employed.

Suitable thermoset resin substrate materials include addition -polymerisation resins - such as acrylics, vinyls, bis-maleimides and unsaturated polyesters, formaldehyde condensate resins - such as condensates with urea, melamine or phenols, cyanate resins, functionalised polyesters, polyamides or polyimides.

A polymeric film substrate for production of a coated film according to the invention may be unoriented, or uniaxially oriented, but is preferably biaxially oriented by drawing in two mutually perpendicular directions in the plane of the film to achieve a satisfactory combination of mechanical and physical properties. Simultaneous biaxial orientation may be effected by extruding a thermoplastics polymeric tube which is subsequently quenched, reheated and then expanded by internal gas pressure to induce transverse orientation, and withdrawn at a rate which will induce longitudinal orientation. In such a simultaneous stretching process, the coating medium is suitably applied to the substrate either before commencement or after conclusion of the stretching operation. Sequential stretching may be effected in a stenter process by extruding the thermoplastics substrate material as a flat extrudate which is subsequently stretched first in one direction and then in the other mutually perpendicular direction. Generally, it is preferred to stretch firstly in the longitudinal direction, ie the forward direction through the film stretching machine, and then in the transverse direction. A stretched substrate film may be, and preferably is, dimensionally stabilised by heat-setting under dimensional restraint at a temperature above the glass transition temperature thereof.

The coating medium may be applied to an already oriented film substrate. However, application of the coating medium is preferably effected before or during the stretching operation.

In particular, it is preferred that the coating medium should be applied to the film substrate between the two stages (longitudinal and transverse) of a biaxial stretching operation. Such a sequence of stretching and coating is especially preferred for the production of a coated linear polyester film substrate, such as a coated polyethylene terephthalate or polyethylene naphthalate film, particularly a polyethylene terephthalate film, which is preferably firstly stretched in the longitudinal direction over a series of rotating rollers, coated, and then stretched transversely in a stenter oven, preferably followed by heat setting.

The coating composition may be applied to the polymeric film as an aqueous dispersion or solution in an organic solvent by any suitable conventional coating technique such as dip coating, bead coating, reverse roller coating or slot coating.

A coating composition applied to the polymeric film substrate is preferably applied as an aqueous dispersion. The temperatures applied to the coated film during the subsequent stretching and/or heat setting are effective in drying the aqueous medium, or the solvent in the case of solvent-applied compositions, and also in coalescing and forming the coating into a continuous and uniform subbing layer. The cross-linking of cross-linkable coating compositions is also achieved at such stretching and/or heat-setting temperatures.

The coating layer is preferably applied to the polymeric film at a coat weight within the range 0.1 to 10 mgdm$^{-2}$, especially 0.5 to 2.0 mgdm$^{-2}$. For films coated on both surfaces, each layer preferably has a coat weight within the preferred range.

Modification of the surface of the coated layer, eg by flame treatment, ion bombardment, electron beam treatment, ultra-violet light treatment or preferably by corona discharge, may improve the adhesion of subsequently applied inks and lacquers, but may not be essential to the provision of satisfactory adhesion.

The preferred treatment by corona discharge may be effected in air at atmospheric pressure with conventional equipment using a high frequency, high voltage generator, preferably having a power output of from 1 to 20 kw at a potential of 1 to 100 kv. Discharge is conveniently accomplished by passing the film over a dielectric support roller at the discharge station at a linear speed preferably of 1.0 to 500 m per minute. The discharge electrodes be positioned 0.1 to 10.0 mm from the moving film surface.

Satisfactory adhesion of a wide range of inks and lacquers applied directly to the surface of the coated layer can however be achieved without any prior surface modification, eg by corona discharge treatment. An example of a coated layer which provides adequate adhesion without corona discharge treatment is a 1.0:1.0 mole mixture of component (a) comprising 1.0:1.4 mole of butadiene/styrene, and component (b) comprising 46:46:8 mole % of methyl methacrylate/ethyl acrylate/methacrylamide.

Prior to deposition of the coating layer onto the polymeric substrate, the exposed surface thereof may, if desired, be subjected to a chemical or physical surface-modifying treatment to improve the bond between that surface and the subsequently applied coating layer. A preferred treatment, because of its simplicity and effectiveness, which is particularly suitable for the treatment of a polyolefin substrate, is to subject the exposed surface of the substrate to a high voltage electrical stress accompanied by corona discharge. Alternatively, the substrate may be pretreated with an agent known in the art to have a solvent or swelling action on the substrate polymer. Examples of such agents, which are particularly suitable for the treatment of a polyester substrate, include a halogenated phenol dissolved in a common organic solvent eg a solution of p-chloro-m-cresol, 2,4-dichlorophenol, 2,4,5- or 2,4 6-trichlorophenol or 4-chlororesorcinol in acetone or methanol.

The ratio of substrate to coated layer thickness may vary within a wide range, although the thickness of the coated layer preferably should not be less than 0.004% nor greater than 10% of that of the substrate. In practice, the thickness of the coated layer is desirably at least 0.01 $\mu$m and preferably should not greatly exceed about 1.0 $\mu$m.

One or more of the layers of a polymeric film according to the invention may conveniently contain any of the additives conventionally employed in the manufacture of polymeric films. Thus, agents such as dyes, pigments, voiding agents, lubricants, anti-oxidants, antiblocking agents, surface active agents, slip aids, gloss-improvers, prodegradants, ultra-violet light stabilisers, viscosity modifiers and dispersion stabilisers may be incorporated in the substrate and/or coated layer(s), as appropriate. In particular a coated layer, and/or a substrate, may comprise a particulate filler, such as silica, of small particle size. Desirably, a filler, if employed in a coated layer, should be present in an amount of not exceeding 50% by weight of polymeric material, and the particle size thereof should not exceed 0.5 $\mu$m, preferably less than 0.3 $\mu$m, and especially from 0.005 to 0.2 $\mu$m. A filler, if employed in a substrate layer, should be present in a small amount, not exceeding 0.5%, preferably less than 0.2%, by weight of the substrate.

The invention is illustrated by reference to the following examples.

## Example 1

A polyethylene terephthalate film was melt extruded, cast onto a cooled rotating drum and stretched in the direction of extrusion to approximately 3 times its original dimensions. The cooled stretched film was then coated with an aqueous composition containing the following ingredients:

| | | |
|---|---|---|
| Acrylic resin (46% w/w aqueous latex of methyl methacrylate/ethyl acrylate/methacrylamide : 46/46/8 mole %, with 25% by weight methoxylated melamine-formaldehyde) | | 65.2 ml |
| DL685 (46% w/w aqueous latex of butadiene/styrene : 1.0/1.4 mole, supplied by Dow) | | 65.2 ml |
| Ammonium nitrate (10% w/w aqueous solution) | | 10 ml |
| Synperonic NP10 (10% w/v aqueous solution of an alkyl nonylphenol ethoxylated surfactant, supplied by ICI) | | 100 ml |
| Demineralised water | to | 2000 ml |

The polyethylene terephthalate film was coated on one side only.

The coated film was passed into a stenter oven, where the film was dried and stretched in the sideways direction to approximately 3 times its original dimensions. The biaxially stretched coated film was heat set at a temperature of about 200°C by conventional means. Final film thickness was 125 $\mu$m, with a dry coat weight of approximately 1 mgdm$^{-2}$.

The adhesion of the coating to the base film was measured using a standard cross-hatch test and found to be good.

## Example 2

This is a comparative example not according to the invention.

The procedure in Example 1 was repeated except that the coating formulation contained no DL685. The amount of acrylic resin present in the formulation was correspondingly increased in order that the overall solids content remained the same.

The adhesion of the coating to the base film was measured using a standard cross-hatch test and found to be good.

## Example 3

This is a comparative example not according to the invention.

The procedure in Example 1 was repeated except that the coating formulation contained no acrylic resin. The amount of DL685 present in the formulation was correspondingly increased in order that the overall solids content remained the same.

The adhesion of the coating to the base film was measured using a standard cross hatch test and found to be poor.

## Example 4

This is a comparative example not according to the invention.

The procedure in Example 1 was repeated except that the polyethylene terephthalate film was not coated.

## Examples 5-12

The adhesion of a range of solvent inks and lacquers, and UV-cured inks and lacquers to the coated film prepared in Example 1 was measured using a standard cross-hatch adhesion test. The inks were coated using a Meyer bar. UV inks were cured using a Primarc Minicure fitted with a medium pressure mercury lamp. Samples passed the 1amp at 5 mmin $^{-1}$. Solvents inks were cured at room temperature for 24 hours prior to testing.

The following inks were used:

Example 5 - MV021 (supplied by Sericol) - a conventional vinyl solvent ink.

Example 6 - HG 32 (supplied by Weiderhold) - a solvent ink.

Example 7 - VJ49-75 (supplied by Acheson) - a vinyl solvent ink.

Example 8 - XL 385 (supplied by Weiderhold) - a solvent ink.

Example 9 - UV 203 (supplied by Sericol) - a graphics UV cured ink.

Example 10 - UV 383 (supplied by Sericol) - a clear gloss UV cured lacquer.

Example 11 - UV 100 (supplied by Weiderhold) a graphics UV cured ink.

Example 12 - 451 SS (supplied by Acheson) - a dielectric UV cured ink.

The ink adhesion results are given in Table 1. The results are expressed as the number of squares removed (a maximum of 9) over the number of pulls of adhesive tape performed eg 9 squares removed in 4 pulls is expressed as 9/4, and no squares removed in 9 pulls is recorded as 0/9 ie 0/9 indicates very good adhesion.

## Examples 13-20

These are comparative examples, not according to the invention.

Examples 5-12 respectively were repeated except that the inks were coated onto film produced in Example 2, instead of onto film produced in Example 1. The results are given in Table 1.

### Examples 21-28

These are comparative examples not according to the invention.

Examples 5-12 respectively were repeated except that the inks were coated onto film produced in Example 3 instead of onto film produced in Example 1. The results are given in Table 1.

### Examples 29-36

These are comparative examples not according to the invention.

Examples 5-12 respectively were repeated except that the inks were coated onto film produced in Example 4, instead of onto film produced in Example 1. The results are given in Table 1

### Examples 37 and 38

Film produced in Example 1 was used in a standard lap shear adhesion test with the following UV cured inks.

Example 37 - 451 55 (supplied by Acheson) - a dielectric UV cured ink.

Example 38 - UV 164 (supplied by Sericol) - a graphics UV cured ink.

The results are given in Table 2.

### Examples 39-44

These are comparative examples not according to the invention.

The procedures in Examples 37 and 38 were repeated except that films produced in Examples 2, 3 and 4 respectively were used, instead of film produced in Example 1. The results are given in Table 2.

### Example 45

Film produced in Example 1 was used in a standard lap shear adhesion test using Windotex (supplied by Autotype) UV cured lacquer. The results are given in Table 3.

TABLE 1

| | FILM PRODUCED IN | | | | | | | |
| --- | --- | --- | --- | --- | --- | --- | --- | --- |
| | Example 1 | | Example 2 (Comparative) | | Example 3 (Comparative) | | Example 4 (Comparative) | |
| INK | Example No | Test Result | Example No | Test Result | Example No | Test Result | Example No | Test Result |
| MV021 | 5 | 0/9 | 13 | 0/9 | 21 | 0/9 | 29 | 9/6 |
| HG 32 | 6 | 0/9 | 14 | 0/9 | 22 | 0/9 | 30 | 9/5 |
| VJ49-75 | 7 | 0/9 | 15 | 0.5/9 | 23 | 1/9 | 31 | 9/4 |
| XL 385 | 8 | 0/9 | 16 | 0/9 | 24 | 0/9 | 32 | 3/9 |
| UV 203 | 9 | 0/9 | 17 | 9/6 | 25 | * | 33 | * |
| UV 383 | 10 | 0/9 | 18 | 0/9 | 26 | 0/9 | 34 | 2/9 |
| UV 100 | 11 | 0/9 | 19 | 9/8 | 27 | 6/9 | 35 | 9/1 |
| 451 SS | 12 | 2/9 | 20 | 0/9 | 28 | 9/1 | 36 | 9/2 |

* NOT TESTED

Example 46

This is a comparative example not according to the invention.

The procedure in Example 45 was repeated except that film produced in Example 2 was used instead of film produced in Example 1. The results are given in Table 3.

Example 47

This is a comparative example not according to the invention.

The procedure in Example 1 was repeated except that the coating formulation contained polystyrene (Vinamul 7700) instead of DL685. The weight ratio of acrylic resin to polystyrene was 4:1. The overall solids content of the aqueous composition was the same as Example 1.

Example 48

This is a comparative example not according to the invention.

The procedure in Example 47 was repeated except that the weight ratio of acrylic resin to polystyrene was 3:1.

Example 49 and 50

These are comparative examples not according to the invention.

Film produced in Examples 47 and 48 respectively were used in a standard lap hear adhesion test using Windotex (supplied by Autotype) UV cured lacquer. The results are given in Table 3.

TABLE 2

| Adhesion/kg | | |
|---|---|---|
| UV cured ink | 451 SS | UV 164 |
| Example No | | |
| 37 | 38.32 | - |
| 38 | - | 31.12 |
| 39 (Comparative) | 27.04 | - |
| 40 (Comparative) | - | 25.42 |
| 41 (Comparative) | 6.08 | - |
| 42 (Comparative) | - | * |
| 43 (Comparative) | 1.41 | - |
| 44 (Comparative) | - | 6.26 |

* NOT TESTED

TABLE 3

| Example No | Adhesion/Kg |
|---|---|
| 45 | 19.5 |
| 46 (Comparative) | 16.8 |
| 49 (Comparative) | 13.1 |
| 50 (Comparative) | 3.5 |

8

Examples 51-53

A polyethylene naphthalate film was melt extruded, cast onto a cooled rotating drum and stretched in the direction of extrusion to approximately 3 times its original dimensions. The cooled stretched film was then coated with an aqueous composition containing the same ingredients as the coating composition used in Example 1, but at the following concentrations:

| | | |
|---|---|---|
| Acrylic resin (46% w/w aqueous latex) | | 66 ml |
| DL685 (15% w/w aqueous latex) | | 200 ml |
| Ammonium nitrate (10% w/w aqueous solution) | | 10 ml |
| Synperonic NP10 (10% w/v aqueous solution) | | 32 ml |
| Demineralised water | to | 1000 ml |

The polyethylene naphthalate film was coated on one side only.

The coated film was passed into a stenter oven, where the film was dried and stretched in the sideways direction to approximately 3 times its original dimensions. The biaxially stretched coated film was heat set at a temperature of about 240°C by conventional means. Final film thickness was 70 $\mu$m, with a dry coat thickness of approximately 0.16 to 0.17 $\mu$m.

The adhesion of the coating to the base film was measured using a standard cross-hatch test and found to be good.

The coated film was subjected to a standard cross-hatch test, as described for Examples 5-12, using VJ49-75, UV 100 and 451 SS inks respectively. The results are given in Table 4.

Examples 54-56

These are comparative examples not according to the invention. The procedure of Examples 51-53 was repeated except that the polyethylene naphthalate film was not coated. The results are given in Table 4.

TABLE 4

| Example No | Ink | Test Result |
|---|---|---|
| 51 | VJ49-75 | 0/9 |
| 52 | UV 100 | 0/9 |
| 53 | 451 SS | 3/9 |
| 54 (Comparative) | VJ49-75 | 9/1 |
| 55 (Comparative) | UV 100 | 9/3 |
| 56 (Comparative) | 451 SS | 9/1 |

Examples 1 to 56 illustrate the improved ink and lacquer adhesion properties of coated films of the present invention.

**Claims**

1. A self supporting plastic film comprising a substrate layer of polymeric material having on at least one surface thereof a polymeric coating layer, characterised in that the polymeric coating layer comprises

9

(a) a first polymeric component comprising at least one monomer selected from butadiene and a derivative thereof, and

(b) a second polymeric component comprising at least one monomer selected from acrylic acid, methacrylic acid and a derivative of acrylic acid and methacrylic acid,

wherein said first and second polymeric components are present as a copolymer thereof, the one with the other, or as a mixture thereof.

2. A film as claimed in claim 1 wherein the first and second polymeric components are present in a weight ratio of from 0.1 to 10:1.

3. A film as claimed in claim 1 wherein the polymeric coating layer comprises a third polymeric component, wherein the first, second and third polymeric components are present as a terpolymer thereof, or as a mixture thereof, or as a mixture of a copolymer of any combination of two out of the three components together with the remaining polymeric component.

4. A film as claimed in claim 3 wherein the first, second and third components are present in a weight ratio of 0.1 to 10:1:0.1 to 10.

5. A film as claimed in either of claims 3 and 4 wherein the third polymeric component comprises at least one monomer selected from styrene and a styrene derivative.

6. A film as claimed in any one of claims 3, 4 and 5 wherein the polymeric coating layer comprises a mixture of the second polymeric component and a copolymer comprising the first and third polymeric components.

7. A film as claimed in claim 6 wherein the second polymeric component comprises a terpolymer of methyl methacrylate/ethyl acrylate/methacrylamide, and the copolymer of the first and third polymeric components comprises a butadiene/styrene copolymer.

8. A film as claimed is any one of the preceding claims wherein the polymeric coating layer has been at least partially cross-linked.

9. A film as claimed in any one of the preceding claims wherein the substrate comprises a biaxially oriented film of polyethylene terephthalate or polyethylene naphthalate.

10. A method of producing a self supporting plastic film by forming a substrate layer of a synthetic polymeric material, appiying to at least one surface thereof a polymeric coating layer, characterised in that the polymeric coating layer comprises.

(a) a first polymeric component comprising at least one monomer selected from butadiene and a derivative thereof, and

(b) a second polymeric component comprising at least one monomer selected from acrylic acid, methacrylic acid and a derivative of acrylic acid and methacrylic acid,

wherein said first and second polymer components are present as a copolymer thereof, the one with the other, or as a mixture thereof.